# FASCICULE DE BREVET EUROPEEN

(11) **EP 1 825 172 B1**
(45) Date de publication et mention de la délivrance du brevet: **25.06.2008**
(21) Numéro de dépôt: 05824537.4
(22) Date de dépôt: 07.12.2005
(51) Int. Cl.: F16J 3/04, F16D 3/84

(54) **MANCHON POLVLOBÉ DE PROTECTION DE TRANSMISSION DE VÉHICULE ET JOINT DE TRANSMISSION ÉQUIPÉ D'UN TEL MANCHON**
MEHRLAPPIGE MANSCHETTE ZUM SCHÜTZEN EINES FAHRZEUGGETRIEBES UND MIT DER MANSCHETTE VERSEHENE GETRIEBEVERBINDUNG
MULTILOBED SOCKET FOR PROTECTING A VEHICLE TRANSMISSION AND A TRANSMISSION JOINT PROVIDED WITH SAID SOCKET

(30) Priorité: 15.12.2004 FR 0413330
(43) Date de publication de la demande: 29.08.2007
(73) Titulaire: Trelleborg Prodyn, 44470 Carquefou (FR)
(72) Inventeur: HOUIS, Jacques, F-44470 Thouare sur Loire (FR)
(74) Mandataire: Laget, Jean-Loup
(86) Numéro de dépôt international: PCT/FR2005/003063
(87) Numéro de publication internationale: WO 2006/064108

(56) Documents cités:
- EP-A- 1 182 372

## Description

La présente invention concerne un joint de transmission du type constitué de deux arbres de transmission reliés par une liaison mécanique articulée, cette liaison étant protégée par un manchon en matériau élastique, tel qu'un soufflet d'étanchéité, ainsi que le soufflet d'étanchéité proprement dit.

Dans les véhicules, entre la boîte de vitesse et les roues du véhicule, il est prévu une transmission constituée de deux arbres reliés entre eux par un organe de transmission mécanique qui nécessite une lubrification. Généralement, l'arbre issu de la boîte de vitesse est équipé d'une tulipe qui constitue l'élément femelle de l'organe de transmission reliant ce premier arbre au second arbre de transmission. Cet élément femelle affecte la forme d'une cavité généralement trilobée. Les lobes délimitent ainsi des logements destinés chacun à recevoir par exemple un galet. Chaque galet est porté par un élément mâle qui présente trois tourillons à galet. Cet élément mâle est lui-même couplé à l'arbre de transmission. Un manchon de protection d'un tel joint tripode homocinétique du type décrit ci-dessus comprend un soufflet cylindro-conique qui, à une extrémité, comporte une grande base polylobée qui, à l'état monté, s'applique sur la surface extérieure de la tulipe ou bol du joint. Cette grande base présente donc une surface intérieure qui a une forme complémentaire à la forme externe de la tulipe polylobée. A l'état monté du manchon sur ladite tulipe, une bague ou collier entoure la grande base du manchon se présentant sous forme d'une surface circulaire concentrique à l'axe longitudinal du manchon pour appliquer la surface polylobée de cette grande base contre le pourtour de la tulipe. La petite base du manchon est quant à elle fixée sur l'arbre de transmission solidaire de l'élément mâle du joint.

Un tel montage est bien connu à ceux versés dans cet art et est notamment décrit dans le brevet européen EP-A-1.182.372. Dans l'état de la technique, il est donc classique que la grande base du manchon présente, à l'état monté sur la tulipe polylobée, une forme extérieure circulaire concentrique à l'axe longitudinal médian du manchon. De ce fait, l'effort de serrage du manchon sur la tulipe, généré par l'organe de serrage du genre collier ou bague, varie localement. Cet effort de serrage est important dans les zones de plus faible épaisseur de la paroi polylobée du manchon alors qu'il est faible dans les zones de plus grande épaisseur de la paroi. Dans ces zones, le serrage peut alors être insuffisant pour obtenir l'étanchéité souhaitée.

Un but de la présente invention est donc de proposer un joint de transmission dont la conception permet en particulier d'égaliser les forces de serrage du manchon sur la tulipe entre les parties minces et les parties renforcées de la paroi polylobée du manchon.

Un autre but de la présente invention est de proposer un manchon de protection apte à être soumis à un effort de serrage engendrant un effort constant sur l'élément polylobé de la liaison mécanique articulée du joint de transmission, à l'état monté du manchon sur l'élément de liaison polylobé de la transmission.

A cet effet, l'invention a pour objet un joint de transmission du type constitué de deux arbres de transmission reliés par une liaison mécanique articulée, cette liaison étant protégée par un manchon en matériau élastique, tel qu'un soufflet d'étanchéité, reliant les deux arbres, une extrémité de ce manchon étant réalisée polylobée pour recouvrir à contact un élément polylobé de la liaison mécanique articulée et coopérant avec un organe de serrage du genre collier entourant l'extrémité polylobée du manchon, caractérisé en ce que l'extrémité polylobée du manchon de protection présente, au niveau de la paroi polylobée, de préférence au droit des zones de plus grande épaisseur de la paroi polylobée, un renforcement de l'épaisseur pour obtenir un renflement radial externe de la paroi dudit manchon, au moins à l'état monté du manchon sur l'élément de liaison polylobé, ce renflement coopérant avec l'organe de serrage du genre collier pour, de préférence, égaliser les efforts de serrage entre les parties minces et les parties renforcées de la paroi polylobée.

Grâce à la présence de ce renflement radial externe de la paroi du manchon, il en résulte, lors de l'application d'un organe de serrage du genre collier ou bague autour de l'extrémité polylobée du manchon, un effort plus important de cet organe de serrage sur la partie radiale externe saillante que sur le reste du pourtour du manchon de manière à égaliser les efforts de serrage au niveau de la totalité du pourtour de ladite paroi, quelle que soit la forme géométrique de cette paroi.

L'invention a encore pour objet un manchon de protection de la liaison mécanique articulée reliant deux arbres de transmission d'un joint de transmission, une extrémité dudit manchon étant réalisée polylobée pour recouvrir à contact un élément polylobé de la liaison mécanique articulée et coopérant avec un organe de serrage du genre collier entourant l'extrémité polylobée dudit manchon, caractérisé en ce que l'extrémité polylobée du manchon de protection présente, au niveau de la paroi polylobée, de préférence au droit des zones de plus grande épaisseur de la paroi polylobée, un renforcement de l'épaisseur pour obtenir un renflement radial externe de la paroi dudit manchon, au moins à l'état monté du manchon sur l'élément de liaison polylobé, ce renflement coopérant avec l'organe de serrage du genre collier pour de préférence égaliser les efforts de serrage entre les parties minces et les parties renforcées de la paroi du manchon.

Le manchon de protection est plus particulièrement destiné à être intégré à un joint de transmission du type précité.

L'invention sera bien comprise à la lecture de la description suivante d'exemples de réalisation, en référence aux dessins annexés dans lesquels :
la figure 1 représente une vue partielle d'ensemble d'un joint de transmission conforme à l'invention ;
la figure 2 représente une vue de côté de la grande base d'un manchon polylobé conforme à l'invention ;
la figure 3 représente une vue en perspective du manchon de la figure 2;
la figure 4 représente une vue de côté d'un autre mode de réalisation d'un manchon conforme à l'invention ;
la figure 5 représente une vue en perspective du manchon de la figure 4 et
la figure 6 représente une vue de côté de la grande base d'un manchon conforme à l'invention à l'état monté sur un élément de liaison polylobé de la transmission.

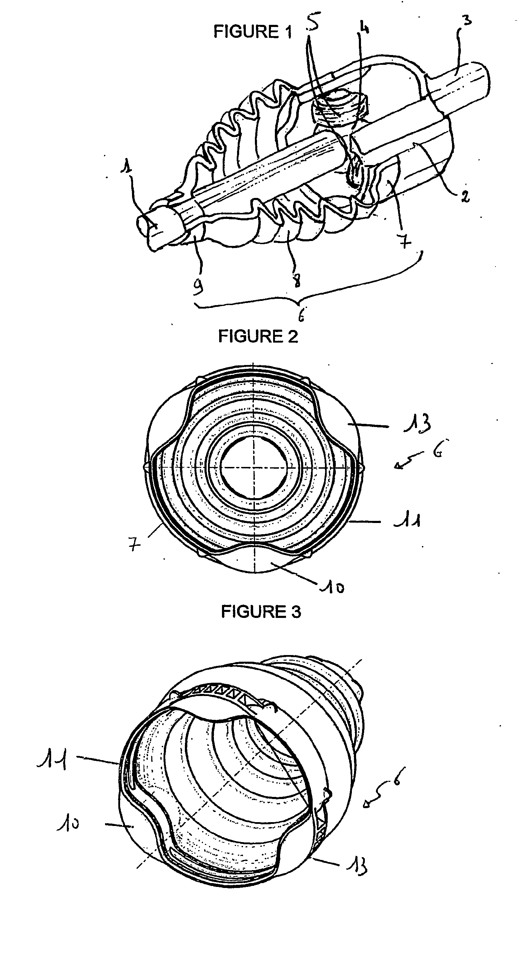

Comme mentionné ci-dessus, le manchon 6, objet de l'invention, est destiné à protéger une transmission du type conforme à celle représentée à la figure 1. Le joint de transmission comprend ainsi deux arbres, représentés en 1 et 3 aux figures, ainsi qu'un organe 2, 4 de transmission articulé reliant les deux arbres 1, 3 entre eux. Cet organe de transmission est constitué par un élément mâle qui présente par exemple trois tourillons à galet espacés angulairement de 120° les uns des autres et un élément 2 femelle. L'élément 2 femelle, encore appelé tulipe, possède des logements destinés chacun à recevoir un galet 5. L'élément mâle du joint est solidaire de l'arbre de transmission représenté en 1 aux figures tandis que l'élément femelle ou tulipe 2 du joint est couplé à l'arbre 3 issu de la boîte de vitesse en étant éventuellement réalisé d'une seule pièce avec ce dernier. Le manchon est destiné à protéger ce joint et est fixé par sa grande base 7 polylobée sur la périphérie de la tulipe 2 qui constitue l'élément femelle du joint solidaire de l'arbre 3 tandis que sa petite base 9 est fixée sur l'arbre 1 de transmission solidaire de l'élément 4 mâle du joint. Le soufflet 8 de ce manchon s'étend donc entre la grande base 7 polylobée et la petite base 9 dudit manchon. Bien évidemment, d'autres modes de réalisation d'une transmission du type de celle mentionnée ci-dessus peuvent être envisagés.

L'extrémité 7 du manchon 6, qui est réalisée polylobée et qui constitue la grande base dudit manchon lorsque le corps du manchon 6 affecte la forme d'un corps cylindro-conique, est agencée pour recouvrir à contact l'élément 2 polylobé ou tulipe de la liaison mécanique articulée. Cette extrémité 7 polylobée du manchon 6 coopère encore avec un organe de serrage, généralement constitué par un collier ou une bague qui entoure l'extrémité 7 polylobée du manchon 6 pour maintenir ce manchon 6 sur le pourtour extérieur de la tulipe 2 à l'état monté du manchon sur l'élément 2 de liaison polylobé et garantir l'étanchéité. Ainsi, la grande base 7 du manchon présente intérieurement des renflements répartis circonférentiellement et de forme généralement courbe, en particulier en arc de cercle, destinés à former les lobes du manchon. Ces zones de la paroi de l'extrémité 7 polylobée du manchon sont appelées zones 10 de plus grande épaisseur. Ces lobes sont reliés entre eux par un segment de paroi circulaire renforcée ou non appelé paroi 11 non lobée du manchon ou encore partie mince de la paroi polylobée du manchon. Ce manchon 6 d'allure générale cylindro-conique présente encore un corps de manchon qui affecte, entre la grande base 7 et la petite base 9, la forme d'un corps cylindro-conique muni d'une pluralité de spires destinées à constituer les éléments du soufflet 8. Dans les exemples représentés, le manchon 6 et l'élément 2 de liaison sont du type trilobé, qui est le cas le plus fréquemment rencontré. Bien évidemment, le nombre de lobes peut varier sans sortir du cadre de l'invention.

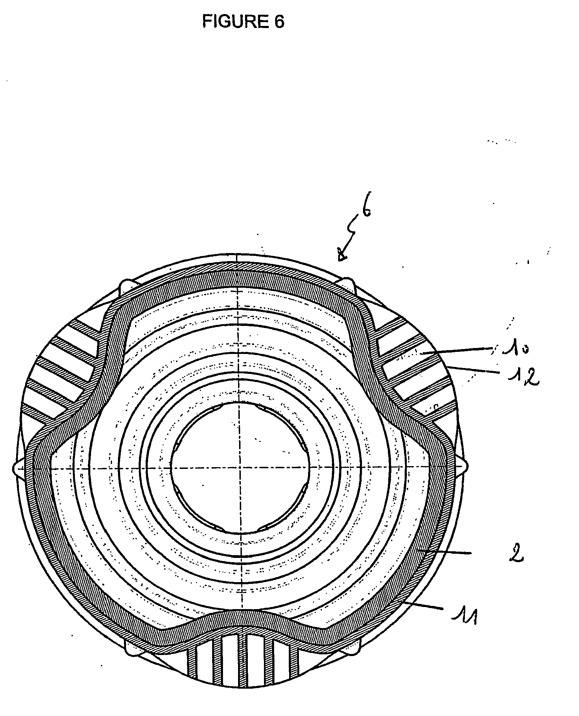

De manière caractéristique à l'invention, l'extrémité 7 polylobée du manchon 6 de protection présente, généralement au droit des zones 10 de plus grande épaisseur de la paroi polylobée, un renforcement 13, 14 de l'épaisseur apte à former, seul ou en coopération avec l'élément 2 de liaison polylobé, à l'état monté du manchon sur l'élément 2 de liaison polylobé, un renflement 12 radial externe de la paroi dudit manchon 6. Ce renflement 12 radial externe confère à la face externe de la paroi polylobée une forme non circulaire, c'est-à-dire non coaxiale à l'axe longitudinal du corps de manchon contrairement à l'état de la technique. Ce renflement 12 est plus particulièrement visible à la figure 6. Ce renflement 12 coopère ainsi avec l'organe de serrage du genre collier appliqué sur le pourtour de l'extrémité 7 polylobée du manchon 6, en particulier pour égaliser les efforts de serrage entre les parties minces et les parties renforcées de la paroi polylobée. On comprend en effet, du fait de l'absence d'une réalisation parfaitement circulaire de la paroi, c'est-à-dire concentriquement à l'axe longitudinal du corps du manchon que, lorsque l'organe de serrage va être appliqué, il va, dans un premier temps, comprimer les parties renforcées ou zone 10 de plus grande épaisseur de l'extrémité 7 polylobée du manchon 6, au droit du renflement 12, avant de venir s'appliquer et serrer les parties 11 de moindre épaisseur. De ce fait, l'effort de serrage du manchon 6 sur la tulipe, appelé "effort de serrage", directement lié à la valeur de serrage exprimée en pourcent et répondant à la formule : [(épaisseur initiale de la paroi - épaisseur finale de la paroi) / épaisseur initiale de la paroi], présente des valeurs sensiblement identiques sur tout le pourtour de la paroi.

Généralement, le renforcement 13, 14, qui se traduit par une augmentation de l'épaisseur de la paroi polylobée du manchon, est ménagé dans la zone des lobes dudit manchon 6 ou dans la zone de liaison entre partie de paroi 10 lobée et partie de paroi 11 non lobée. De tels renflements sont répartis localement à la surface de la périphérie de la paroi polylobée à l'emplacement des zones de la paroi devant être soumises à un effort de serrage plus intense.

Deux modes de réalisation du renflement 12 radial externe peuvent être envisagés. Dans un premier mode de réalisation qui correspond aux figures 2 et 3, le renforcement 13 est ménagé par une surépaisseur radiale externe de la paroi polylobée du manchon 6. Ainsi, dans ce premier mode de réalisation et comme l'illustre la figure 2, le manchon présente, à l'état non monté sur la tulipe 2, une extrémité 7 polylobée non circulaire extérieurement, en particulier non concentrique ou non coaxiale à l'axe longitudinal médian du manchon. En effet, dans la zone des lobes du manchon ou dans la zone de liaison entre partie de paroi lobée et partie de paroi non lobée, l'extrémité 7 polylobée du manchon 6 présente des parties de paroi en saillie radiale externe qui seront comprimées les premières lors de l'application de l'organe de serrage. Cette compression des zones de plus grande épaisseur est présente seule jusqu'à ce que l'organe de serrage atteigne les zones 11 de plus faible épaisseur de la paroi polylobée. Alors, la poursuite du serrage permet de comprimer la totalité du pourtour du manchon. Grâce à cette pré-compression des zones 10 de plus grande épaisseur, on obtient au final un effort de serrage sensiblement égal entre les parties minces et les parties renforcées de la paroi polylobée.

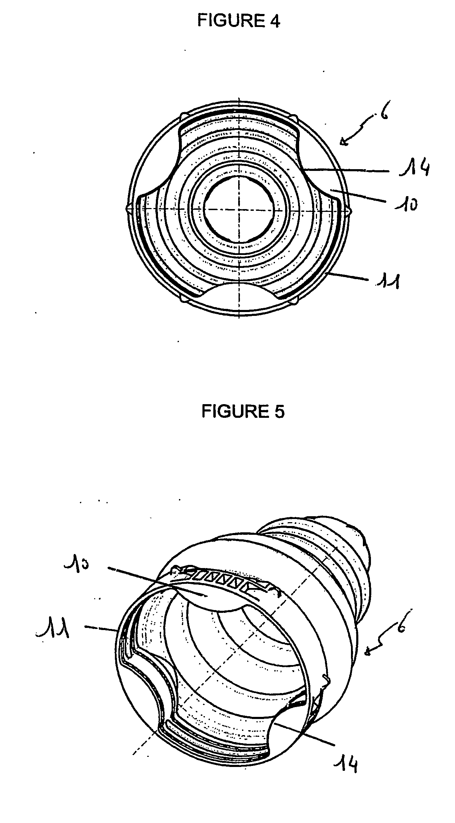

Dans un autre mode de réalisation, représenté aux figures 4 et 5, le renforcement 14 est ménagé par une surépaisseur radiale interne de la paroi polylobée du manchon 6. En effet, dans ce cas, et cela peut être visible par comparaison entre la figure 4 et la figure 2, les parois de plus grande épaisseur, correspondant à la zone des lobes du manchon, sont renforcées en direction de l'intérieur du manchon pour créer une zone qui sera susceptible d'être pré-comprimée lors de l'emboîtement de l'élément 2 polylobé de la transmission à l'intérieur dudit manchon. Ainsi, lorsque l'élément 2 polylobé ou tulipe de la liaison mécanique du joint de transmission est emmanché à l'intérieur de la grande base du manchon, on génère une pré-compression de la paroi polylobée du manchon au niveau des zones de renforcement 14. Outre cette pré-compression, il en résulte une déformation de la paroi périphérique externe de l'extrémité 7 de ce manchon pour obtenir une forme conforme à celle représentée à la figure 6 qui constitue l'équivalent de la forme de paroi polylobée du manchon qui aurait été obtenue dans le cas d'un renforcement ménagé par une surépaisseur radiale externe de la paroi polylobée du manchon.

En conséquence, les deux modes de réalisation sont deux modes équivalents. Dans un cas, on choisit une forme externe de la paroi polylobée du manchon non circulaire à l'état non monté du manchon sur l'élément 2 polylobé de la liaison mécanique de la transmission alors que, dans l'autre cas, on choisit une forme intérieure de la paroi polylobée du manchon non complémentaire de la tulipe pour générer une pré-compression de ladite paroi polylobée du manchon. Dans ce dernier cas, les sommets des lobes de la paroi polylobée sont disposés sur un cercle de rayon inférieur au rayon du cercle passant par la base des parties concaves de la tulipe. Quel que soit le mode de réalisation retenu, l'effet obtenu est équivalent, à savoir obtenir un renflement 12 radial externe de la paroi du manchon 6 à l'état monté du manchon sur l'élément 2 de liaison polylobé. Lorsque le renforcement 13 est ménagé par une surépaisseur radiale externe de la paroi polylobée du manchon 6, il est possible d'identifier visuellement un tel manchon puisqu'il en résulte une paroi périphérique externe non circulaire du manchon et ce contrairement à l'état de la technique. Lorsque le renforcement 14 est ménagé par une surépaisseur radiale interne de la paroi polylobée du manchon, il suffira de constater que la forme de la tulipe n'est pas parfaitement complémentaire de la forme du manchon pour visualiser l'objet de l'invention. Par ailleurs, à l'état monté du manchon sur l'élément 2 polylobé de la liaison mécanique articulée de la transmission, l'objet de l'invention apparaît clairement comme l'illustre la figure 6. On note que si l'objectif est généralement d'égaliser les efforts de serrage entre les parties minces et les parties renforcées de la paroi polylobée, l'objet de l'invention permet de manière plus générale d'accroître localement un effort de serrage en vue par exemple de renforcer l'effort de serrage s'appliquant dans une zone sensible aux fuites.

## Revendications

1. Joint de transmission du type constitué de deux arbres (1, 3) de transmission reliés par une liaison mécanique articulée, cette liaison étant protégée par un manchon (6) en matériau élastique, tel qu'un soufflet d'étanchéité, reliant les deux arbres (1, 3), une extrémité (7) de ce manchon (6) étant réalisée polylobée pour recouvrir à contact un élément (2) polylobé de la liaison mécanique articulée et coopérant avec un organe de serrage du genre collier entourant l'extrémité (7) polylobée du manchon (6),
**caractérisé en ce que** l'extrémité (7) polylobée du manchon (6) de protection présente, au niveau de la paroi polylobée, au droit des zones (10) de plus grande épaisseur de la paroi polylobée, un renforcement (13, 14) de l'épaisseur pour obtenir un renflement (12) radial externe de la paroi dudit manchon (6), au moins à l'état monté du manchon sur l'élément (2) de liaison polylobé, ce renflement (12) coopérant avec l'organe de serrage du genre collier pour égaliser les efforts de serrage entre les parties minces et les parties renforcées de la paroi polylobée.

2. Joint de transmission selon la revendication 1,
**caractérisé en ce que** le renforcement (13, 14) est ménagé dans la zone des lobes dudit manchon (6).

3. Joint de transmission selon la revendication 1,
**caractérisé en ce que** le renforcement (13, 14) est ménagé dans la zone de liaison entre partie de paroi (10) lobée et partie de paroi (11) non lobée.

4. Joint de transmission selon l'une des revendications 1 à 3,
**caractérisé en ce que** le renforcement (13) est ménagé par une surépaisseur radiale externe de la paroi polylobée du manchon (6).

5. Joint de transmission selon l'une des revendications 1 à 3,
**caractérisé en ce que** le renforcement (14) est ménagé par une surépaisseur radiale interne de la paroi polylobée du manchon (6).

6. Joint de transmission selon l'une des revendications 1 à 5,
**caractérisé en ce que** le manchon (6) et l'élément (2) de liaison sont du type trilobé.

7. Joint de transmission selon l'une des revendications 1 à 6,
**caractérisé en ce que** le corps du manchon (6) affecte la forme d'un corps cylindro-conique muni d'une pluralité de spires destinées à constituer les éléments du soufflet (8).

8. Manchon (6) de protection de la liaison mécanique articulée reliant deux arbres (1, 3) de transmission d'un joint de transmission, une extrémité (7) dudit manchon (6) étant réalisée polylobée pour recouvrir à contact un élément (2) polylobé de la liaison mécanique articulée et coopérant avec un organe de serrage du genre collier entourant l'extrémité (7) polylobée dudit manchon (6),
**caractérisé en ce que** l'extrémité (7) polylobée du manchon (6) de protection présente, au niveau de la paroi polylobée, au droit des zones (10) de plus grande épaisseur de la paroi polylobée, un renforcement (13, 14) de l'épaisseur pour obtenir un renflement (12) radial externe de la paroi dudit manchon (6), au moins à l'état monté du manchon (6) sur l'élément (2) de liaison polylobé, ce renflement (12) coopérant avec l'organe de serrage du genre collier pour égaliser les efforts de serrage entre les parties minces et les parties renforcées de la paroi du manchon (6).

9. Manchon selon la revendication 8,
**caractérisé en ce que** le renforcement (13) est ménagé par une surépaisseur radiale externe de la paroi polylobée du manchon (6).

10. Manchon selon la revendication 8,
**caractérisé en ce que** le renforcement (14) est ménagé par une surépaisseur radiale interne de la paroi polylobée du manchon (6).

## Claims

1. Transmission joint of the type formed by two transmission shafts (1, 3) connected by an articulated mechanical link, said link being protected by a gaiter (6) of elastic material, such as a bellows seal, connecting the two shafts (1, 3), an end (7) of said gaiter (6) having a poly-lobed configuration for contiguously covering a poly-lobed element (2) of the articulated mechanical link and cooperating with a collar-type clamping element surrounding the poly-lobed end (7) of the gaiter (6), **characterised in that** the poly-lobed end (7) of the protective gaiter (6) has, in the region of the poly-lobed wall, at right angles to the thickest zones (10) of the poly-lobed wall, a thickness reinforcement (13, 14) in order to obtain an external radial swelling (12) of the wall of said gaiter (6), at least in the installed state of the gaiter on the poly-lobed linking element (2), said swelling (12) cooperating with the collar-type clamping element in order to equalise the clamping loads between the thin portions and the reinforced portions of the poly-lobed wall.

2. Transmission joint according to Claim 1, **characterised in that** the reinforcement (13, 14) is formed in the zone of the lobes of said gaiter (6).

3. Transmission joint according to Claim 1, **characterised in that** the reinforcement (13, 14) is formed in the linking zone between the lobed portion (10) of the wall and the non-lobed portion (11) of the wall.

4. Transmission joint according to any one of Claims 1 to 3, **characterised in that** the reinforcement (13) is formed by an external radial excess thickness of the poly-lobed wall of the gaiter (6).

5. Transmission joint according to any one of Claims 1 to 3, **characterised in that** the reinforcement (14) is formed by an internal radial excess thickness of the poly-lobed wall of the gaiter (6).

6. Transmission joint according to any one of Claims 1 to 5, **characterised in that** the gaiter (6) and the linking element (2) are of the tri-lobed type.

7. Transmission joint according to any one of Claims 1 to 6, **characterised in that** the body of the gaiter (6) has the shape of a cylindro-conical body provided with a plurality of corrugations forming the elements of the bellows (8).

8. Protective gaiter (6) of the articulated mechanical link connecting two transmission shafts (1, 3) of a transmission joint, an end (7) of said gaiter (6) having a poly-lobed configuration for contiguously covering a poly-lobed element (2) of the articulated mechanical link and cooperating with a collar-type clamping element surrounding the poly-lobed end (7) of the gaiter (6), **characterised in that** the poly-lobed end (7) of the protective gaiter (6) has, in the region of the poly-lobed wall, at right angles to the thickest zones (10) of the poly-lobed wall, a thickness reinforcement (13, 14) in order to obtain an external radial swelling (12) of the wall of said gaiter (6), at least in the installed state of the gaiter (6) on the poly-lobed linking element (2), said swelling (12) cooperating with the collar-type clamping element in order to equalise the clamping loads between the thin portions and the reinforced portions of the wall of the gaiter (6).

9. Gaiter according to Claim 8, **characterised in that** the reinforcement (13) is formed by an external radial excess thickness of the poly-lobed wall of the gaiter (6).

10. Gaiter according to Claim 8, **characterised in that** the reinforcement (14) is formed by an internal radial excess thickness of the poly-lobed wall of the gaiter (6).

## Patentansprüche

1. Getriebeverbindung aus zwei Getriebewellen (1, 3), die über eine mechanische Gelenkverbindung verbunden sind, wobei die Verbindung von einer Manschette (6) aus einem elastischen Werkstoff, beispielsweise einem Dichtungsbalg, die die beiden Wellen (1, 3) verbindet, geschützt ist, wobei ein Ende (7) der Manschette (6) mehrgliedrig ausgeführt ist, um ein mehrgliedriges Element (2) der mechanischen Gelenkverbindung berührend zu bedecken, und mit einem schellenartigen Klemmelement zusammenwirkt, das das mehrgliedrige Ende (7) der Manschette (6) umgibt, **dadurch gekennzeichnet, dass** das mehrgliedrige Ende (7) der Schutzmanschette (6) an der mehrgliedrigen Wand in den dicksten Bereichen (10) der mehrgliedrigen Wand eine Verstärkung (13, 14) der Dicke aufweist, um wenigstens im befestigten Zustand der Manschette an dem mehrgliedrigen Verbindungselement (2) eine außen an der Wand der Manschette (6) radial verlaufende Ausbauchung (12) zu erhalten, die mit dem schellenartigen Klemmelement zusammenwirkt, um die Klemmkräfte zwischen den dünnen Teilen und den verstärkten Teilen der mehrgliedrigen Wand auszugleichen.

2. Getriebeverbindung nach Anspruch 1, **dadurch gekennzeichnet, dass** die Verstärkung (13, 14) in dem Bereich der Glieder der Manschette (6) angeordnet ist.

3. Getriebeverbindung nach Anspruch 1, **dadurch gekennzeichnet, dass** die Verstärkung (13, 14) in dem Verbindungsbereich zwischen dem mehrgliedrigen Wandteil (10) und dem nicht mehrgliedrig ausgeführten Wandteil (11) angeordnet ist.

4. Getriebeverbindung nach einem der Ansprüche 1 bis 3, **dadurch gekennzeichnet, dass** die Verstärkung (13) als eine außen an der mehrgliedrigen Wand der Manschette (6) radial verlaufende Verdickung angeordnet ist.

5. Getriebeverbindung nach einem der Ansprüche 1 bis 3, **dadurch gekennzeichnet, dass** die Verstärkung (13) als eine innen an der mehrgliedrigen Wand der Manschette (6) radial verlaufende Verdickung angeordnet ist.

6. Getriebeverbindung nach einem der Ansprüche 1 bis 5, **dadurch gekennzeichnet, dass** die Manschette (6) und das Verbindungselement (2) dreigliedrig sind.

7. Getriebeverbindung nach einem der Ansprüche 1 bis 6, **dadurch gekennzeichnet, dass** der Körper der Manschette (6) als Zylinderkonus mit einer Mehrzahl von Windungen ausgebildet ist, die dafür vorgesehen sind, die Elemente des Balgs (8) zu bilden.

8. Schutzmanschette (6) der mechanischen Gelenkverbindung, die zwei Getriebewellen (1, 3) einer Getriebeverbindung verbindet, wobei ein Ende (7) der Manschette (6) mehrgliedrig ausgeführt ist, um ein mehrgliedriges Element (2) der mechanischen Gelenkverbindung berührend zu bedecken, und mit einem schellenartigen Klemmelement zusammenwirkt, das das mehrgliedrige Ende (7) der Manschette (6) umgibt, **dadurch gekennzeichnet, dass** das mehrgliedrige Ende (7) der Schutzmanschette (6) an der mehrgliedrigen Wand in den dicksten Bereichen (10) der mehrgliedrigen Wand eine Verstärkung (13, 14) der Dicke aufweist, um wenigstens im befestigten Zustand der Manschette an dem mehrgliedrigen Verbindungselement (2) eine außen an der Wand der Manschette (6) radial verlaufende Ausbauchung (12) zu erhalten, die mit dem schellenartigen Klemmelement zusammenwirkt, um die Klemmkräfte zwischen den dünnen Teilen und den verstärkten Teilen der Wand der Manschette (6) auszugleichen.

9. Manschette nach Anspruch 8, **dadurch gekennzeichnet, dass** die Verstärkung (13) als eine außen an der mehrgliedrigen Wand der Manschette (6) radial verlaufende Verdickung angeordnet ist.

10. Manschette nach Anspruch 8, **dadurch gekennzeichnet, dass** die Verstärkung (13) als eine innen an der mehrgliedrigen Wand der Manschette (6) radial verlaufende Verdickung angeordnet ist.
